# EUROPEAN PATENT SPECIFICATION

(11) **EP 2 060 425 B1**
(45) Date of publication and mention of the grant of the patent: **14.07.2010**
(21) Application number: 07425724.7
(22) Date of filing: 14.11.2007
(51) Int. Cl.: B60J 7/06, B60J 7/20, B60J 1/18

(54) **Convertible motor vehicle**
Kabriolett
Cabriolet

(43) Date of publication of application: 20.05.2009
(73) Proprietor: Fiat Group Automobiles S.p.A., 10135 Torino (TO) (IT)
(72) Inventor: Tosco, Franco c/o Fiat Group Automobiles S.p.A., 10135 Torino (IT); Ala, Luigi c/o Fiat Group Automobiles S.p.A., 10135 Torino (IT)
(74) Representative: Jorio, Paolo

(56) References cited:
- EP-A- 1 332 905
- WO-A-01/14157
- WO-A-01/14158
- FR-A- 2 865 162

## Description

The present invention relates to a convertible motor vehicle according to the preamble of claim 1. Such a vehicle is known from EP 1332905 A.

Motor vehicles provided with a soft-top cover, i.e. a fabric covering for the roof, which is waterproof and can be gathered up and folded away to open the roof, are known in the prior art. When the soft-top cover is folded away, it is normally gathered at the back of the roof or stowed inside the boot at the back of the motor vehicle.

The majority of the solutions in the prior art in which the soft-top cover is stowed in the boot have relatively large dimensions: on the one hand, they cannot be installed on motor vehicles having relatively small dimensions, particularly those commonly referred to as "city cars"; on the other hand, they tend to significantly reduce the luggage capacity of the boot.

A soft-top cover for small vehicles is described in European patents EP1121258 and EP1123220. The soft-top cover is folded away and stowed on the outer surface of the rear window of the motor vehicle. When the soft-top cover is arranged on the outer surface of the rear window, the latter can pivot in a downward direction towards the inside of the motor vehicle; the soft-top cover is thus stowed in the boot together with the rear window.

The known solution of the type described above also falls short of being satisfactory, in that the rear window and the soft-top cover are coupled to one another while being transferred to the boot. In other words, the soft-top cover and rear window are not moved in a totally independent manner, which means it is not possible for the rear window to remain in the raised position while the soft-top cover is stowed in the boot.

The purpose of the present invention is to provide a convertible motor vehicle, which overcomes the drawbacks described above in a simple and cost-effective manner.

According to the present invention a convertible motor vehicle is produced, as defined in claim 1.

In order to better understand the present invention, a non-limiting preferred embodiment thereof will now be described by way of example with reference to the accompanying drawings, in which:
- figure 1 is a perspective view of a preferred embodiment of the convertible motor vehicle according to the present invention;
- figure 2 is a cross-section view on an enlarged scale of the rear portion of the motor vehicle in figure 1;

- figure 3 is the same as figure 1 and shows the motor vehicle while the roof is being removed;
- figure 4 is a cross-section along the line IV-IV of figure 1;
- figure 5 is a cross-section along the line V-V of figure 1; and
- figure 6 is a perspective view from the top, on an enlarged scale and with parts removed for the sake of clarity, of a detail of the motor vehicle in figure 1.

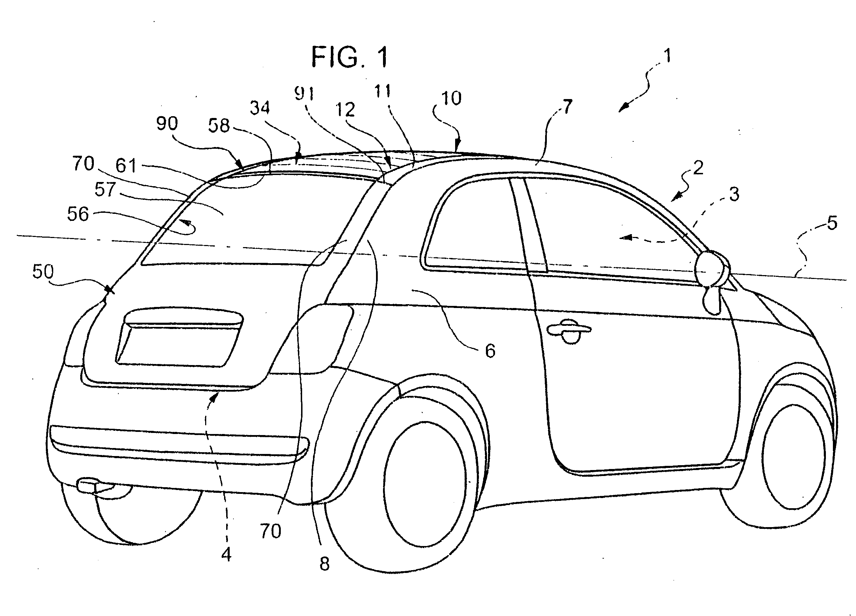

In figure 1, number 1 indicates, as a whole, a motor vehicle (partially illustrated), in particular a motor vehicle of relatively small dimensions belonging to the so-called "city-car" category.

The motor vehicle 1 comprises a body 2 defining a passenger compartment 3 and a boot 4, which is arranged behind the passenger compartment considering a longitudinal direction 5 of travel of the motor vehicle 1. In particular, the body 2 comprises two side panels 6, which end, in an upward direction, with respective longitudinal members 7 and, to the rear, with respective pillars 8, which extend as extensions of the longitudinal members 7 without interruption. The pillars 8 define an opening for the boot 4; the longitudinal members 7 support a roof 10.

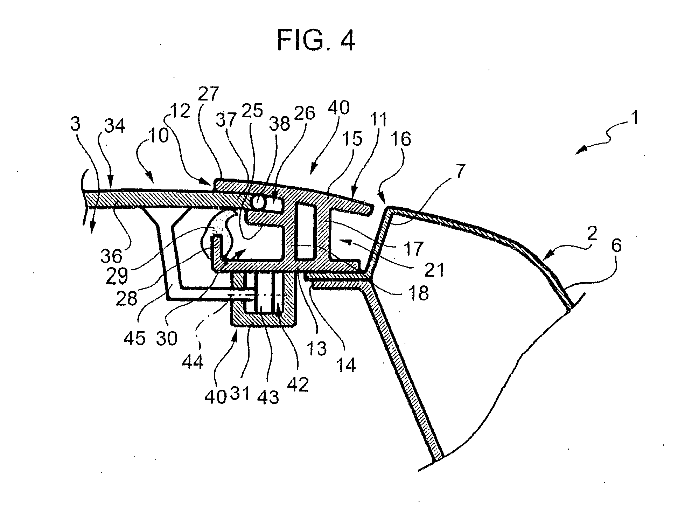

With reference to figure 4, the roof 10 comprises two longitudinal side members 11, which between them define an upper opening 12 for the passenger compartment 3 and comprise respective base walls 13 that are substantially horizontal and are supported by and fastened to respective longitudinal tabs 14 defining the inner ends of the longitudinal members 7. The members 11 comprise respective upper walls 15, which are separated from the longitudinal members 7 by means of respective slits 16 and have an external profile that is substantially aligned with that of the longitudinal members 7. The walls 13 and 15 are integrally joined together by two vertical spaced walls 17 and 18. The walls 17 face towards the longitudinal members 7 and define, with the outer ends of the walls 13 and 15, respective longitudinal recesses, which define a portion of two water drainage channels 21 communicating with the outside via the slits 16.

The members 11 have respective longitudinal grooves 26, each of which is superiorly defined by an inner end portion 27 of the wall 15 and inferiorly by a tab 25. The tabs 25 extend from the walls 18 in a cantilevered fashion towards the inside, are substantially parallel to the relative walls 15, and have a smaller cross-section than that of the portions 27 with respect to the walls 18.

The members 11 comprise respective vertical tabs 28, which extend in a cantilevered fashion in an upward direction, i.e. towards the portions 27, starting from the inner edge of the walls 13 and define the supports for respective longitudinal seals 29. The walls 18 and 13 and the tabs 25 and 28, with the seals 29, between them define two water drainage channels 30, which are substantially parallel to the channels 21.

The lower surfaces of the walls 13 carry respective longitudinal guideways 31, which are fixed to the members 11 and arranged in positions alongside the tabs 14 and beneath the channels 30.

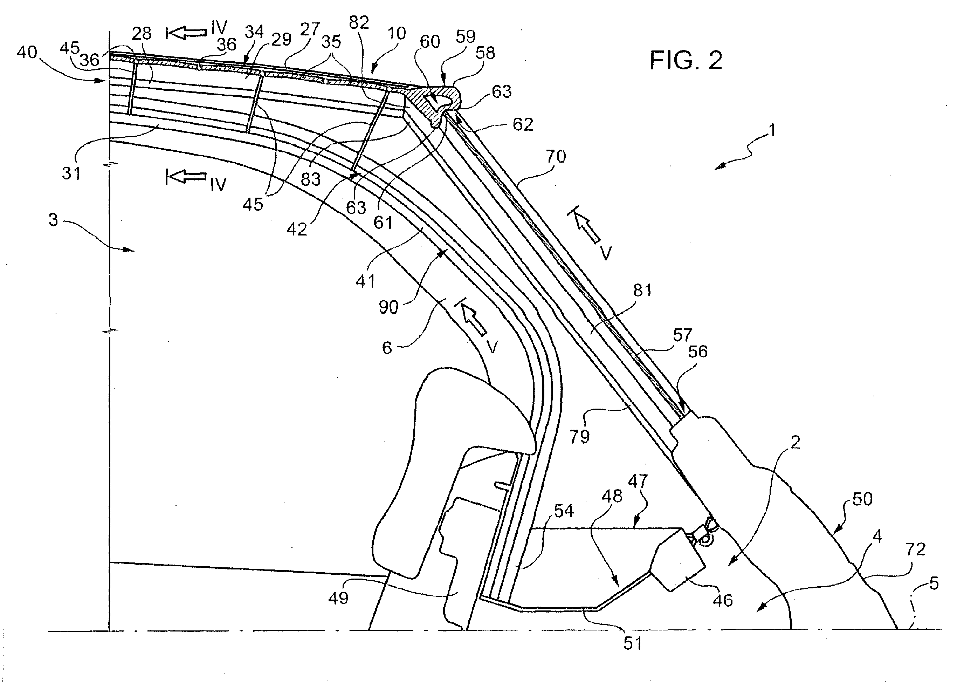

With reference to figures 2 to 4, the roof 10 also comprises a soft-top cover 34, i.e. a folding cover, which in turn comprises a waterproof fabric that forms a series of layers 35 that are foldable about transverse folding lines. Said folding lines are preferably defined by respective transverse stiffening elements 36.

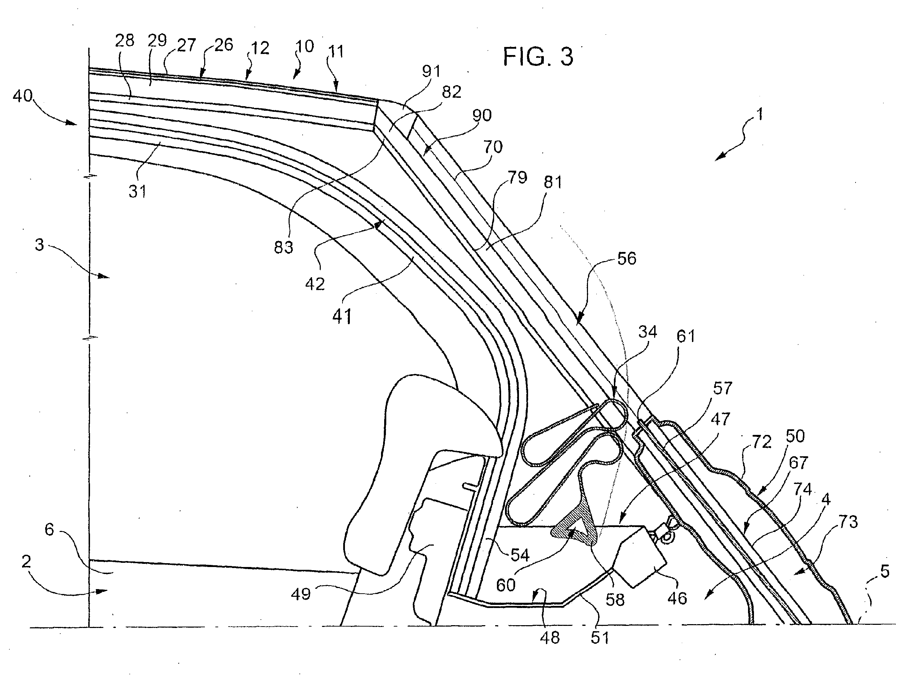

The soft-top cover 34 is movable between an unfolded configuration (figure 2), in which the fabric closes the opening 12 with its side edges 37 that slidingly engage the grooves 26; and a folded configuration (figure 3), in which the layers 35 are gathered and arranged one on top of the other, leaving the roof 10 open.

Preferably, each edge 37 of the fabric houses a plurality of elastic bows 38 arranged longitudinally in succession one after the other, one for each layer 35. The elastic bows 38 have three functions: they guide the fabric out of and into the grooves 26 during the movement between the unfolded and folded configurations; they keep the layers 35 taut, to prevent the fabric from curling when the soft-top cover 34 is in the folded configuration; and they completely engage the space between the tabs 25 and the portions 27 when the soft-top cover 34 is in the unfolded configuration, to eliminate the play in the grooves 26 and, thus, reduce the noise level of the soft-top cover 34.

With reference to figure 3, the movement of the soft-top cover 34 between the two configurations is guided by means of a guiding arrangement 40, which comprises the grooves 26, the guideways 31 and two guideways 41, which are attached in a fixed position to the side panels 6, preferably consist of two parts aligned in relation to one another, and are arranged so as to form an extension of the guideways 31 without any interruption, in order to define together two rails 42 that extend along the roof 10 and up to the upper end of the boot 4.

According to what shown in figures 2 and 4, the rails 42 are engaged by a plurality of slides 43, carried by the elements 36 and defined by respective wheels. The wheels are idly rotatable about respective axes 44, which are parallel to one another, are at right angles to the rails 42 and are defined by respective hinge pins. The hinge pins are fastened to the elements 36 by means of respective arms 45 in a way that is not described in detail. In the same way as the wheels, the rails 42 could be engaged by slidingly coupled and lubricated sliding elements.

The soft-top cover 34 is pulled between the two configurations by means of a Bowden cable transmission of a known type that is not illustrated, which is arranged along the rails 42 and is driven by an electric motor 46, which is provided in a fixed position on a body 47 defining an upper housing 48.

The housing 48 is arranged, along the direction 5, between the upper edge of the backrests 49 of the rear seats in the passenger compartment 3 and a hatchback door 50, which is movable to open and close the opening of the boot 4. The body 47 is preferably tank-shaped and comprises a bottom wall 51, which extends between the pillars 8, is releasably or movably connected to the body 2, inferiorly defines the upper side of the boot 4, and superiorly defines a hat board when the soft-top cover 34 is in the unfolded configuration.

As shown in figure 3, the guideways 41 end in the downward direction with respective portions 54, which are arranged in the front end of the housing 48 and have ends that are closed, for example by the wall 51. When the soft-top cover 34 is in the folded configuration, the portions 54 define an area in which the slides 43 are gathered; and the housing 48 defines an area in which the folded layers 35 are gathered. The housing 48 is arranged in a position below that of a back window, so that the soft-top cover 34 does not obstruct the driver's view through the back window when the soft-top cover 34 is arranged in the housing 48 in the folded configuration.

The back window comprises an opening 56 that continues the opening 12 rearly and in a downward direction; and a rear window (pane) 57 the width of which is preferably the same as that of the soft-top cover 34.

The rear window 57 is movable from and towards a forward position, in which the rear window 57 completely closes the opening 56 and is directly coupled to a rear end element 58 of the soft-top cover 34 when the soft-top cover 34 is in the unfolded configuration.

With reference to figure 2, when the soft-top cover 34 is in the unfolded configuration, the element 58 is arranged just on the outside of the members 11, it closes the rear ends of the grooves 26, and has an aerodynamic upper profile 59 so as to define a small spoiler. The element 58 is elastically deformable, it is attached to the fabric cover or is a one-piece construction with the fabric cover, it is internally hollow, and has a closed cross-section. In particular, the element 58 defines a cavity 60 that extends for the entire width of the soft-top cover 34, i.e. between the rear ends of the members 11 when the soft-top cover 34 is in the unfolded configuration.

When the rear window 57 is arranged in the forward position and the soft-top cover 34 is in the unfolded configuration, the upper transverse edge 61 of the rear window 57 is forced against a rear wall 62 of the element 58, so as to elastically deform the element 58 and provide the fluid-tight seal between the rear window 57 and the soft-top cover 34. In particular, the edge 61 is arranged against an intermediate area between two rounded edges 63 defining the ends of the wall 62, so that in this working condition the wall 61 is concave towards the edge 61, with the rounded edges 63 arranged above and, respectively, below the rear window 57.

With reference to figure 3, the path and position of the guideways 41 are such as to guide the soft-top cover 34 towards the folded configuration making the soft-top cover 34 pass through the opening 56 from the outside towards the inside of the motor vehicle while the rear window 57 is at least partially retracted. The dashed line in figure 3 indicates the maximum dimensions of the trajectory of the soft-top cover 34 when it is folded and moved into the housing 48. The appropriate dimensioning of the guideways 41 and layers 35 means that only an upper part of the opening 56 has to be released from the rear window 57.

The rear window 57 is moved from and towards the forward position by means of a sliding movement. In other words, the side edges 66 of the rear window 57 slidingly engage respective guideways 67 in order to raise/lower the rear window 57.

According to the preferred embodiment illustrated, the rear window 57 is carried by the door 50, so as to be movable jointly with the door 50. In other words, the guideways 67 are fixed with respect to the door 50.

The opening 56 is preferably laterally and inferiorly delimited by the door 50, which therefore defines a hatchback door. In other words, the hatchback door 50 comprises two upper side pillars 70, which are coupled in a fluid-tight manner to respective side portions of the rear window 57 and house the upper portions 71 of the guideways 67. The hatchback door 50 also comprises a lower plate portion 72, which defines the actual closure of the boot 4, is also coupled in a fluid-tight manner to the rear window 57, and has an inner chamber 73 that houses the lower portions 74 of the guideways 67.

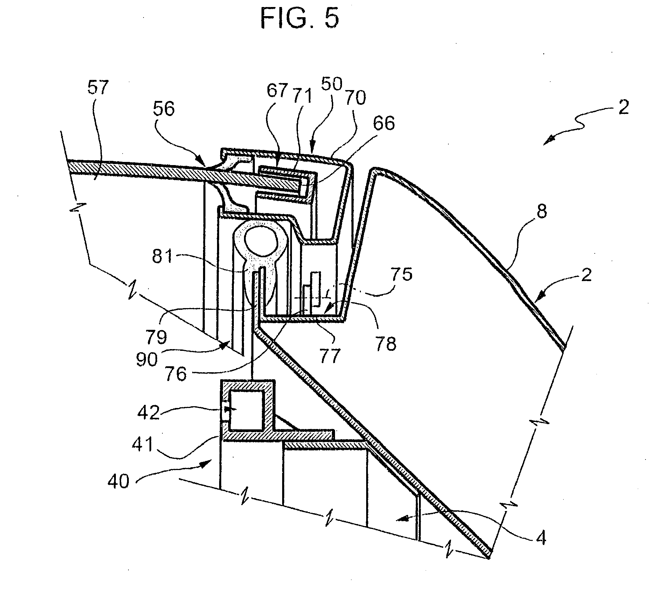

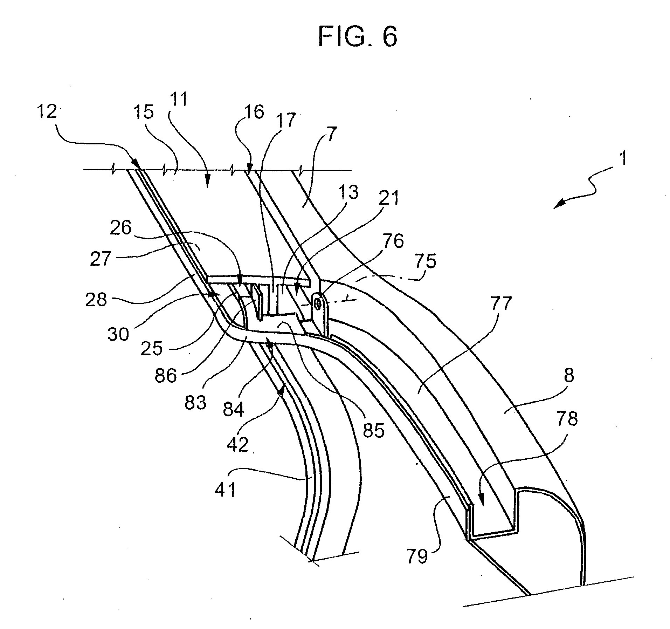

With reference to figures 5 and 6, the pillars 70 are hinged to the rear ends of the longitudinal members 7 and/or to the upper ends of the pillars 8 in a way that is schematically illustrated, to enable the hatchback door 50 to pivot about a horizontal axis 75 between a raised open position and a lowered closed position. In particular, the pillars 70 are hinged to respective brackets 76 supported by and fastened to respective walls 77, which constitute part of the pillars 8 and define the bottom of respective water drainage channels 78.

The channels 78 are laterally delimited towards the inside of the boot 4 by respective vertical tabs 79, which constitute part of the pillars 8, extend in a cantilevered fashion and in an upward direction starting from the inner edges of the walls 77 and define the supports for respective seals 81. The seals 81 face towards the pillars 70 and are arranged so as to come into contact with the pillars 70 when the hatchback door 50 is arranged in the lowered closed position.

On each side of the motor vehicle 1, the tabs 79 and 28 are joined and made continuous with respect to one another by means of a tab 83 which is part of a body 84, that is arranged between the upper ends of the walls 77 and the members 11, is fastened to the pillars 8 and/or to the members 11, and is preferably a one-piece plastic construction. The body 84 comprises a base wall 85 which joins the walls 13 and 77 without interruption, so that the body 84 places the channels 78 in communication with the channels 21 and with the channels 30.

The body 84 also comprises a ramp 86, which extends without interruption starting from the tab 25 in a downward direction, preferably as far as the wall 85, and starting from the upper end of the wall 18 outwards, in order to define an opening that facilitates the insertion of the relative edge 37 into the groove 26 when the soft-top cover 34 is moved into the unfolded configuration.

Again on each side of the motor vehicle 1, the seals 29 and 81 are coupled together by means of a connecting seal portion 82 (figures 2 and 3) fitted to the tab 83, so as to define a continuous lateral seal. The connecting seal portions 82 are preferably defined by the upper ends of the seals 81.

When the soft-top cover 34 is in the unfolded configuration, the seals 29 form a fluid-tight seal with a lower surface of the soft-top cover 34; and the side ends of the element 58 are arranged above and coupled in a fluid-tight manner to the connecting seal portions 82.

In the plan view, the profile of the tabs 83 and, thus, of the connecting seal portions 82 widens outwards, that is towards the pillars 8, so that the tabs 79 and, thus, the seals 81 are arranged at a distance that is greater than the width of the soft-top cover 34. Consequently, the edges 37 of the soft-top cover 34, at the bottom of the ramps 86, can pass over the connecting seal portions 82 and then pass between the seals 81 through the opening 56 while the slides 43 slide in the upper portions of the guideways 41.

The seals 29 and 81 and the element 58 constitute part of a seal arrangement 90 to prevent water flowing into the passenger compartment 3 and into the boot 4. On the one hand, water that falls onto the roof 10 is collected in the channels 21 and then flows rearwards into the channels 78; on the other, any water that leaks through between the layers 35 and the members 11 falls from the grooves 25 into the channels 30 and then flows from the channels 30 into the channels 78 thanks to the confluence defined by the bodies 84.

With reference to figure 3, the arrangement 90 also comprises two seals 91, which substantially close the empty space between the upper ends of the pillars 70 and the rear ends of the members 11, cover the hinges defined by the brackets 76 and, preferably, are fixed to the pillars 70. When the soft-top cover 34 is in the unfolded configuration (figure 1), the seals 91 and the element 58 are side by side so as to guarantee, between the roof 10 and the hatchback door 50, a seal that is continuous in the transverse direction.

Clearly, said seal is no longer present when the rear window 57 is moved back with respect to the element 58 to at least partially open the opening 56. The rear window 57 is moved by means of a motor-driven actuating device (not illustrated), for example by means of a device similar to those commonly used to control the electric side windows of motor vehicles. The driver can raise and/or lower the rear window 57 if necessary, using appropriate controls that are not illustrated; however, in the following cases the actuating device is controlled automatically by a central control unit (not illustrated), based on the use of sensors and control logics, which can be implemented by the person skilled in the art:
- when the hatchback door 50 is raised to open the entrance to the boot 4, at least when the soft-top cover 34 is in the unfolded configuration: the rear window 57 is lowered slightly with respect to its forward position, so as to detach the edge 61 of the rear window 57 from the wall 62 of the element 58;
- when the hatchback door 50 has been lowered to close the entrance to the boot 4, at least when the soft-top cover 34 is in the unfolded configuration: the rear window 57 is raised to its forward position, in order to completely close the opening 56 and force the rear window 57 back against the element 58;
- when the soft-top cover 34 must be moved between its unfolded and folded configurations: the rear window 57 is lowered sufficiently to enable the soft-top cover 34 to pass through the opening 56 while the layers 35 are gathered or unfolded.

By providing such automatic control of the rear window 57, it is clear that the hatchback door 50 can be raised and lowered without affecting the soft-top cover 34, and that the soft-top cover 34 can be folded and unfolded while the hatchback door 50 remains in the lowered closed position.

From the above description it is clear that the motor vehicle 1 has limited overall dimensions, thanks to the guideways 41, and allows the rear window 57 to be lowered and raised to open/close the opening 56 regardless of the configuration of the soft-top cover 34.

In the folded configuration the soft-top cover 34 requires particularly limited dimensions and is completely stowed in the housing 48, without excessively penalizing the capacity of the boot 4, it does not obstruct the driver's view through the rear opening 56, and does not extend beyond the side of the motor vehicle 1. Even during the movement between the folded and unfolded configurations, the trajectory of the layers 35 only takes up a limited amount of space on the outside of the motor vehicle 1.

Moreover, the rear window 57 is bigger with respect to other solutions in which the rear window is supported directly by the soft-top cover.

The fact that the rear door 50 is provided in the form of a hatchback door with pillars 70 that define the opening 56 means the boot 4 can be opened and accessed in a convenient manner. From the outside, the motor vehicle 1 looks like a vehicle with a traditional hatchback door, and the soft-top cover 34 does not substantially alter the appearance with respect to motor vehicles with a fixed hard-top roof.

Lastly, it is clear that modifications and variations may be made to the motor vehicle 1 described and illustrated herein without departing from the scope of the present invention, as set forth in the appended claims.

In particular, the term "folded configuration" can also apply to the case in which the soft-top cover 34 is rolled up inside the housing 48, instead of having layers 35 arranged one on top of the other.

The movement between the unfolded and folded configurations could be obtained by means of a transmission other than the Bowden cable transmission, for example by a belt-type transmission.

Moreover, the guideways 67 could be fixed with respect to the side panels 6. The rear door 50 could be a hatchback door, without pillars 70, defined solely by the plate portion 72, hinged directly to the pillars 8.

The shape of the element 58 could be different to that illustrated; and/or the rear window 57 could pivot outwards, instead of sliding downwards, to at least partially free the opening 56 to allow the soft-top cover 34 to pass through the opening 56; and/or the housing 48 could be arranged in another part of the boot 4.

Finally, the slits 16 could be at least partially engaged by finishing elements or sealing elements.

## Claims

1. Convertible motor vehicle (1) comprising:
- a roof (10) comprising a soft-top cover (34) and two longitudinal side members (11), which define between them an upper opening (12);
- first guiding means (40) to guide said soft-top cover (34) between an unfolded configuration, in which said upper opening (12) is closed, and a folded configuration, in which said soft-top cover (34) is gathered up leaving said roof (10) open;
- a rear opening (56) extending continuously with respect to said upper opening (12), and
- a rear window (57), which is movable from and towards a forward position, in which it completely engages said rear opening (56) and is coupled directly to a rear end portion (58) of said soft-top cover (34) when said soft-top cover (34) is in the unfolded configuration;
**characterized in that** said first guiding means (40) comprise two rails (42) having a path and a position such as to guide said soft-top cover (34) in the folded configuration towards a housing (48) obtained in a position below that of said rear opening (56) and such as to make said soft-top cover (34) pass through said rear opening (56) towards the inside of the motor vehicle (1) after at least an upper part of said opening (56) has been released from said rear window (57).

2. Motor vehicle according to claim 1, **characterized in that** said first guiding means (40) are fixed with respect to a body of the motor vehicle.

3. Motor vehicle according to claim 2, **characterized in that** said first guiding means (40) comprise:
- two front guideways (31) that are fixed with respect to said longitudinal side members (11), and
- two rear guideways (41) fixed to a rear portion of the body (8) and arranged as an extension of said front guideways (31) without interruption.

4. Motor vehicle according to claim 3, **characterized in that** said rear guideways (41) end in the front end of said housing (48).

5. Motor vehicle according to any of the previous claims, **characterized in that** said rear end portion (58) is elastically deformable and, when said soft-top cover (34) is in the unfolded configuration, is compressed by an upper transverse edge (61) of said rear window (57) to obtain a fluid-tight seal.

6. Motor vehicle according to claim 5, **characterized in that** said rear window (57) and said rear end portion (58) have substantially the same width.

7. Motor vehicle according to claim 5 or 6, **characterized in that** said rear end portion (58) has an inner cavity (60).

8. Motor vehicle according to any of the previous claims, **characterized in that** said rear window (57) is carried by a rear door (50) that is movable to open/close a rear boot (4) of the motor vehicle.

9. Motor vehicle according to any of the previous claims, **characterized by** comprising second guiding means (67) to allow said rear window (57) to slide in a downward direction with respect to said forward position.

10. Motor vehicle according to claims 8 and 9, **characterized in that** said second guiding means (67) are housed in said rear door (50).

11. Motor vehicle according to claim 10, **characterized in that** said rear door is a hatchback door (50) comprising two upper side pillars (70) laterally defining said rear opening (56).

12. Motor vehicle according to any of the previous claims, **characterized in that** said first guiding means (40) comprise two longitudinal grooves (26) obtained in said longitudinal side members (11) and engaged by respective longitudinal side edges (37) of said soft-top cover (34) when said soft-top cover (34) is in the unfolded configuration.

13. Motor vehicle according to claim 12, **characterized in that** said longitudinal side edges (37) comprise a series of elastic bows (38).

14. Motor vehicle according to any of the previous claims, **characterized by** comprising:
- two front sealing elements (29) provided in fixed positions on said longitudinal side members (11) and forming a fluid-tight seal with a lower surface of said soft-top cover (34) when said soft-top cover (34) is in the unfolded configuration;
- two rear sealing elements (81), which are provided in fixed positions on a rear portion of the body (8), are joined to said front sealing elements (29) so as to define continuous lateral seals, and are transversely spaced with respect to one another at a greater distance than that between said front sealing elements (29) to allow said soft-top cover (34) to move between the unfolded and folded configurations.

15. Motor vehicle according to claim 14, **characterized by** comprising:
- a first pair of drainage channels (30) laterally delimited, towards the inside of said motor vehicle (1), by said front sealing elements (29);
- a second pair of drainage channels (21) delimited by said longitudinal side elements (11) and by respective side panels (6) of the motor vehicle;
- a third pair of drainage channels (78) laterally delimited, towards the inside of said motor vehicle (1), by said rear sealing elements (81);
the drainage channels of said first and second pair (30, 21) communicating with the drainage channels of said third pair (78).

16. Motor vehicle according to any of the previous claims, **characterized in that** said housing (48) is obtained in a body (47) that defines the upper side of a rear boot (4).

17. Motor vehicle according to claim 16, **characterized in that** said body (47) defines a hat board when said soft-top cover (34) is in the unfolded configuration.

18. Motor vehicle according to claim 16 or 17, **characterized by** comprising a motor to move said soft-top cover (34) between the unfolded and folded configurations; said motor being attached to said body (47).

## Patentansprüche

1. Cabriolet-Kraftfahrzeug (1), umfassend:
- ein Dach (10) mit einem Verdeckbezug (34) und zwei längslaufenden Seitenelementen (11), die zwischen ihnen eine obere Öffnung (12) definieren;
- erste Führungsmittel (40) zum Führen des Verdeckbezugs (34) zwischen einer entfalteten Konfiguration, in der die obere Öffnung (12) verschlossen ist, und einer gefalteten Konfiguration, in der der Verdeckbezug (34) zusammengerafft ist, wodurch das Dach (10) offen gelassen wird;
- eine hintere Öffnung (56), die sich in Bezug auf die obere Öffnung (12) durchgehend erstreckt, und
- ein Heckfenster (57), das ausgehend von einer und in eine nach vorne gerichtete(n) Position bewegt werden kann, in der es vollständig in die hintere Öffnung (56) eingefügt ist, und das direkt mit einem hinteren Endabschnitt (58) des Verdeckbezugs (34) verbunden ist, wenn sich der Verdeckbezug (34) in der entfalteten Konfiguration befindet;
**dadurch gekennzeichnet,**
**dass** die ersten Führungsmittel (40) zwei Schienen (42) umfassen, die einen derartigen Weg und eine derartige Position aufweisen, dass der Verdeckbezug (34) in der gefalteten Konfiguration zu einem Gehäuse (48) geführt wird, das in einer Position unter jener der hinteren Öffnung (56) gebildet ist, und dass der Verdeckbezug (34) durch die hintere Öffnung (56) in Richtung auf das Innere des Kraftfahrzeugs (1) geführt wird, nachdem mindestens ein oberer Teil der Öffnung (56) von dem Heckfenster (57) gelöst wurde.

2. Kraftfahrzeug nach Anspruch 1,
**dadurch gekennzeichnet,**
**dass** die ersten Führungsmittel (40) in Bezug auf einen Aufbau des Kraftfahrzeugs feststehend sind.

3. Kraftfahrzeug nach Anspruch 2,
**dadurch gekennzeichnet,**
**dass** die ersten Führungsmittel (40) umfassen:
- zwei vordere Führungsbahnen (31), die in Bezug auf die längslaufenden Seitenelemente (11) feststehend sind, und
- zwei hintere Führungsbahnen (41), die an einem hinteren Teil des Aufbaus (8) befestigt sind und ohne Unterbrechung als Verlängerung der vorderen Führungsbahnen (31) angeordnet sind.

4. Kraftfahrzeug nach Anspruch 3,
**dadurch gekennzeichnet,**
**dass** die hinteren Führungsbahnen (41) am vorderen Ende des Gehäuses (48) enden.

5. Kraftfahrzeug nach einem der vorhergehenden Ansprüche,
**dadurch gekennzeichnet,**
**dass** der hintere Endabschnitt (58) elastisch verformbar ist und, wenn sich der Verdeckbezug (34) in der entfalteten Konfiguration befindet, durch eine obere Querkante (61) des Heckfensters (57) zusammengedrückt wird, um eine flüssigkeitsdichte Abdichtung zu bilden.

6. Kraftfahrzeug nach Anspruch 5,
**dadurch gekennzeichnet,**
**dass** das Heckfenster (57) und der hintere Endabschnitt (58) im Wesentlichen die gleiche Breite aufweisen.

7. Kraftfahrzeug nach Anspruch 5 oder 6,
**dadurch gekennzeichnet,**
**dass** der hintere Endabschnitt (58) einen inneren Hohlraum (60) aufweist.

8. Kraftfahrzeug nach einem der vorhergehenden Ansprüche,
**dadurch gekennzeichnet,**
**dass** das Heckfenster (57) von einer Hecktür (50) getragen wird, die beweglich ist, um einen hinteren Kofferraum (4) des Kraftfahrzeugs zu öffnen/verschließen.

9. Kraftfahrzeug nach einem der vorhergehenden Ansprüche,
**dadurch gekennzeichnet,**
**dass** es zweite Führungsmittel (67) umfasst, um es dem Heckfenster (57) zu ermöglichen, in Abwärtsrichtung in Bezug auf die nach vorne gerichtete Position zu gleiten.

10. Kraftfahrzeug nach Anspruch 8 und 9,
**dadurch gekennzeichnet,**
**dass** die zweiten Führungsmittel (67) in der Hecktür (50) untergebracht sind.
Kraftfahrzeug nach Anspruch 10,
**dadurch gekennzeichnet,**
**dass** die Hecktür eine Heckklappe (50) ist, die zwei obere Seitenpfosten (70) umfasst, die seitlich die hintere Öffnung (56) definieren.

11. Kraftfahrzeug nach einem der vorhergehenden Ansprüche,
**dadurch gekennzeichnet,**
**dass** die ersten Führungsmittel (40) zwei längslaufende Rillen (26) umfassen, die in den längslaufenden Seitenelementen (11) gebildet sind und die sich in Eingriff mit den jeweiligen längslaufenden Seitenrändern (37) des Verdeckbezug (34) befinden, wenn sich der Verdeckbezug (34) in der entfalteten Konfiguration befindet.

12. Kraftfahrzeug nach Anspruch 1 2,
**dadurch gekennzeichnet,**
**dass** die längslaufenden Seitenränder (37) eine Reihe elastischer Bügel (38) umfassen.

13. Kraftfahrzeug nach einem der vorhergehenden Ansprüche,
**dadurch gekennzeichnet,**
**dass** es Folgendes umfasst:
- zwei vordere Dichtungselemente (29), die an feststehenden Positionen an den längslaufenden Seitenelementen (11) vorgesehen sind und eine flüssigkeitsdichte Abdichtung mit einer unteren Fläche des Verdeckbezugs (34) bilden, wenn sich der Verdeckbezug (34) in der entfalteten Konfiguration befindet;
- zwei hintere Dichtungselemente (81), die an feststehenden Positionen an einem hinteren Abschnitt des Aufbaus (8) vorgesehen sind, mit den vorderen Dichtungselementen (29) verbunden sind, um durchgehende seitliche Dichtungen zu bilden, und in Querrichtung in Bezug zueinander einen größeren Abstand aufweisen als jener zwischen den vorderen Dichtungselementen (29), um es dem Verdeckbezug (34) zu ermöglichen, sich zwischen der entfalteten und der gefalteten Konfiguration zu bewegen.

14. Kraftfahrzeug nach Anspruch 14,
**dadurch gekennzeichnet,**
**dass** es Folgendes umfasst:
- ein erstes Paar von Ablaufrinnen (30), die seitlich in Richtung auf das Innere des Kraftfahrzeugs (1) durch die vorderen Dichtungselemente (29) begrenzt sind;
- ein zweites Paar von Ablaufrinnen (21), die durch die längslaufenden Seitenelemente (11) und durch jeweilige Seitenteile (6) des Kraftfahrzeugs begrenzt sind;
- ein drittes Paar von Ablaufrinnen (78), die seitlich in Richtung auf das Innere des
Kraftfahrzeugs (1) durch die hinteren Dichtungselemente (81) begrenzt sind;
wobei die Ablaufrinnen des ersten und zweiten Paares (30, 21) mit den Ablaufrinnen des dritten Paares (78) kommunizieren.

15. Kraftfahrzeug nach einem der vorhergehenden Ansprüche,
**dadurch gekennzeichnet,**
**dass** das Gehäuse (48) in einem Aufbau (47) gebildet ist, der die obere Seite eines hinteren Kofferraums (4) definiert.

16. Kraftfahrzeug nach Anspruch 16,
**dadurch gekennzeichnet,**
**dass** der Aufbau (47) eine Hutablage bildet, wenn sich der Verdeckbezug (34) in der entfalteten Konfiguration befindet.

17. Kraftfahrzeug nach Anspruch 16 oder 17,
**dadurch gekennzeichnet,**
**dass** es einen Motor umfasst, um den Verdeckbezug (34) zwischen der entfalteten und der gefalteten Konfiguration zu bewegen; wobei der Motor an dem Aufbau (47) befestigt ist.

18. Kraftfahrzeug nach Anspruch 16 oder 17,
**dadurch gekennzeichnet,**
**dass** es einen Motor umfasst, um den Verdeckbezug (34) zwischen der entfalteten und der gefalteten Konfiguration zu bewegen; wobei der Motor an dem Aufbau (47) befestigt ist.

## Revendications

1. Véhicule automobile décapotable (1) comprenant :
- un toit (10) comprenant une capote souple (34) et deux éléments latéraux longitudinaux (11), qui définissent entre eux une ouverture supérieure (12) ;
- des premiers moyens de guidage (40) pour guider ladite capote souple (34) entre une configuration dépliée, dans laquelle ladite ouverture supérieure (12) est fermée, et une configuration pliée, dans laquelle ladite capote souple (34) est rassemblée en laissant ledit toit (10) ouvert ;
- une ouverture arrière (56) s'étendant de manière continue par rapport à ladite ouverture supérieure (12), et
- une fenêtre arrière (57), qui est mobile depuis et vers une position avant, dans laquelle elle s'engage complètement avec ladite ouverture arrière (56) et est directement couplée à une partie d'extrémité arrière (58) de ladite capote souple (34) lorsque ladite capote souple (34) est dans la configuration dépliée ;
**caractérisé en ce que** lesdits premiers moyens de guidage (40) comprennent deux rails (42) ayant un trajet et une position tels qu'ils guident ladite capote souple (34) dans la configuration pliée vers un logement (48) obtenu dans une position au-dessous de celle de ladite ouverture arrière (56) et de manière à faire passer ladite capote souple (34) à travers ladite ouverture arrière (56) vers l'intérieur du véhicule automobile (1) après qu'au moins une partie supérieure de ladite ouverture (56) a été libérée de ladite fenêtre arrière (57).

2. Véhicule automobile selon la revendication 1, **caractérisé en ce que** lesdits premiers moyens de guidage (40) sont fixes par rapport à un corps du véhicule automobile.

3. Véhicule automobile selon la revendication 2, **caractérisé en ce que** lesdits premiers moyens de guidage (40) comprennent :
- deux glissières avant (31) qui sont fixes par rapport auxdits éléments latéraux longitudinaux (11), et
- deux glissières arrière (41) fixées à une partie arrière du corps (8) et disposées comme une extension desdites glissières avant (31) sans interruption.

4. Véhicule automobile selon la revendication 3, **caractérisé en ce que** lesdites glissières arrière (41) se terminent dans l'extrémité avant dudit logement (48).

5. Véhicule automobile selon l'une quelconque des revendications précédentes, **caractérisé en ce que** ladite partie d'extrémité arrière (58) est élastiquement déformable et, lorsque ladite capote souple (34) est dans la configuration dépliée, est comprimée par un bord transversal supérieur (61) de ladite fenêtre arrière (57) pour obtenir un joint étanche aux fluides.

6. Véhicule automobile selon la revendication 5, **caractérisé en ce que** ladite fenêtre arrière (57) et ladite partie d'extrémité arrière (58) ont sensiblement la même largeur.

7. Véhicule automobile selon la revendication 5 ou 6, **caractérisé en ce que** ladite partie d'extrémité arrière (58) a une cavité intérieure (60).

8. Véhicule automobile selon l'une quelconque des revendications précédentes, **caractérisé en ce que** ladite fenêtre arrière (57) est portée par une porte arrière (50) qui est mobile pour ouvrir/fermer un coffre arrière (4) du véhicule automobile.

9. Véhicule automobile selon l'une quelconque des revendications précédentes, **caractérisé en ce qu'**il comprend des seconds moyens de guidage (67) pour permettre à ladite fenêtre arrière (57) de glisser dans une direction vers le bas par rapport à ladite position avant.

10. Véhicule automobile selon les revendications 8 et 9, **caractérisé en ce que** lesdits seconds moyens de guidage (67) sont logés dans ladite porte arrière (50).

11. Véhicule automobile selon la revendication 10, **caractérisé en ce que** ladite porte arrière est un hayon (50) comprenant deux montants latéraux supérieurs (70) définissant latéralement ladite ouverture arrière (56).

12. Véhicule automobile selon l'une quelconque des revendications précédentes, **caractérisé en ce que** lesdits premiers moyens de guidage (40) comprennent deux rainures longitudinales (26) obtenues dans lesdits éléments latéraux longitudinaux (11) et en prise avec des bords latéraux longitudinaux respectifs (37) de ladite capote souple (34) lorsque ladite capote souple (34) est dans la configuration dépliée.

13. Véhicule automobile selon la revendication 12, **caractérisé en ce que** lesdits bords latéraux longitudinaux (37) comprennent une série d'arceaux élastiques (38).

14. Véhicule automobile selon l'une quelconque des revendications précédentes, **caractérisé en ce qu'**il comprend :
- deux éléments d'étanchéité avant (29) disposés dans des positions fixes sur lesdits éléments latéraux longitudinaux (11) et formant un joint étanche aux fluides avec une surface inférieure de ladite capote souple (34) lorsque ladite capote souple (34) est dans la configuration dépliée ;
- deux éléments d'étanchéité arrière (81), qui sont disposés dans des positions fixes sur une partie arrière du corps (8), sont assemblés auxdits éléments d'étanchéité avant (29) de manière à définir des joints latéraux continus, et sont espacés transversalement l'un par rapport à l'autre à une plus grande distance que celle entre lesdits éléments d'étanchéité avant (29) pour permettre à ladite capote souple (34) de se déplacer entre les configurations dépliée et pliée.

15. Véhicule automobile selon la revendication 14, **caractérisé en ce qu'**il comprend :
- une première paire de canaux d'écroulement (30) délimité latéralement, vers l'intérieur dudit véhicule automobile (1), par lesdits éléments d'étanchéité avant (29) ;
- une deuxième paire de canaux d'écroulement (21) délimités par lesdits éléments latéraux longitudinaux (11) et par des panneaux latéraux respectifs (6) du véhicule automobile ;
- une troisième paire de canaux d'écoulement (78) délimités latéralement, vers l'intérieur dudit véhicule automobile (1), par lesdits éléments d'étanchéité arrière (81) ;
les canaux d'écoulement desdites première et deuxième paires (30, 21) communiquant avec les canaux d'écoulement de ladite troisième paire (78).

16. Véhicule automobile selon l'une quelconque des revendications précédentes, **caractérisé en ce que** ledit logement (48) est obtenu dans un corps (47) qui définit le côté supérieur d'un coffre arrière (4).

17. Véhicule automobile selon la revendication 16, **caractérisé en ce que** ledit corps (47) définit une plage arrière lorsque ladite capote souple (34) est dans la configuration dépliée.

18. Véhicule automobile selon la revendication 16 ou 17, **caractérisé en ce qu'**il comprend un moteur pour déplacer ladite capote souple (34) entre les configurations dépliée et pliée ; ledit moteur étant fixé audit corps (47).
